# EUROPEAN PATENT APPLICATION

(11) **EP 4 822 157 A1**
(43) Date of publication of application: **14.10.2026**
(21) Application number: 26165011.3
(22) Date of filing: 16.03.2026
(51) Int. Cl.: F02C 7/22, B01D 19/00

(54) **GAS TURBINE ENGINE FUEL SYSTEM**

(30) Priority: 08.04.2025 US 202519173004
(71) Applicant: General Electric Company, Cincinnati, Ohio 45215 (US)
(72) Inventor: HINDERLITER, Kevin Edward, Evendale, 45215 (US); NIERGARTH, Daniel Alan, Evendale, 45241 (US)
(74) Representative: Openshaw & Co.

(57) **Abstract**

A fuel deoxygenator system includes a stripping gas line, a contactor including a fuel inlet fluidly connected to a fuel tank, a gas inlet, and a mixture outlet, a separator including a mixture inlet fluidly connected to the mixture outlet, a fuel outlet, and a gas outlet fluidly connected to the stripping gas line, a recuperator including a first fluid inlet, a first fluid outlet, a second fluid inlet, and a second fluid outlet, and a catalyst including an inlet and an outlet. The first fluid inlet of the recuperator is fluidly connected to the gas outlet of the separator, the first fluid outlet of the recuperator is fluidly connected to the inlet of the catalyst, the second fluid inlet is fluidly connected to the outlet of the catalyst, and the second fluid outlet is fluidly connected to the gas inlet of the contactor.

## Description

### FIELD

The present disclosure relates to a fuel system for a gas turbine engine, and particularly for a fuel deoxygenation system.

### BACKGROUND

Typical aircraft propulsion systems include one or more gas turbine engines. The gas turbine engines generally include a turbomachine, the turbomachine including, in serial flow order, a compressor section, a combustion section, a turbine section, and an exhaust section. In operation, air is provided to an inlet of the compressor section where one or more axial compressors progressively compress the air until it reaches the combustion section. Fuel is mixed with the compressed air and burned within the combustion section to provide combustion gases. The combustion gases are routed from the combustion section to the turbine section. The flow of combustion gases through the turbine section drives the turbine section and is then routed through the exhaust section, e.g., to atmosphere.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a schematic view of an exemplary gas turbine engine.
FIG. 2 is a schematic view of an exemplary fuel system for the gas turbine engine of FIG. 1.
FIG. 3 is a schematic view of another exemplary fuel system for the gas turbine engine of FIG. 1.
FIG. 4 is a schematic view of another exemplary fuel system for the gas turbine engine of FIG. 1.
FIG. 5 is a schematic view of another exemplary fuel system for the gas turbine engine of FIG. 1.
FIG. 6 is a block diagram of an exemplary method for deoxygenating fuel for the gas turbine engine of FIG. 1.
FIG. 7 is a block diagram of an exemplary controller operable with the gas turbine engine of FIG. 1.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a", "an", and "the" include plural references unless the context clearly dictates otherwise.

The term "at least one of" in the context of, e.g., "at least one of A, B, and C" refers to only A, only B, only C, or any combination of A, B, and C.

The phrases "from X to Y" and "between X and Y" each refers to a range of values inclusive of the endpoints (i.e., refers to a range of values that includes both X and Y).

A "stripping gas" is a gas that is generally capable of removing oxygen from liquid fuel. Example stripping gases include, but are not limited to, air, argon, nitrogen, another gas inert to combustion reactions, or combinations thereof. Specifically, the stripping gas is chosen such that, when mixed with liquid fuel, the partial pressure of oxygen in the liquid fuel is greater than the partial pressure of oxygen in the stripping gas, which causes the oxygen in the liquid fuel to separate from the liquid fuel and to mix with the stripping gas, forming "mixed stripping gas."

The present disclosure is generally related to controlling oxygen content of fuel for use in aerospace applications. Certain fuel delivery systems for aircraft including gas turbine engines include a system for removing an oxygen content of an air within an ullage of a fuel tank (e.g., the fuel tank from which fuel is provided to the gas turbine engines). Removing the oxygen from the fuel reduces oxidation reactions that may occur in the fuel tank and provides more consistent combustion when used in the gas turbine engine.

Disclosed herein are example systems and methods for removing oxygen from the fuel with a stripping gas that collects oxygen from the fuel and reacts with a catalyst to remove the collected oxygen from the stripping gas stream. The chemical reactions between the catalyst and the oxygen in the stripping gas occur most frequently at a specific temperature range, so heating the stripping gas prior to introduction to the catalyst improves removal of the oxygen from the stripping gas. Additionally, the chemical reactions are exothermic, so the stripping gas leaving the catalyst with the oxygen removed is hotter than the mixed stripping gas reaching the catalyst. The example systems disclosed herein include a recuperator that transfers heat from the hot stripping gas leaving the catalyst to the colder stripping gas provided to the catalyst, increasing the efficiency of the system by reducing the additional amount of heat added to the stripping gas stream to enable the chemical reactions and oxygen removal from the stripping gas inside the catalyst. Then, the stripping gas is used to remove more oxygen from the fuel. In such a form, the recuperator recovers heat to improve the chemical reactions of the catalyst, reducing additional heaters or heat management to drive the deoxygenating chemical reactions.

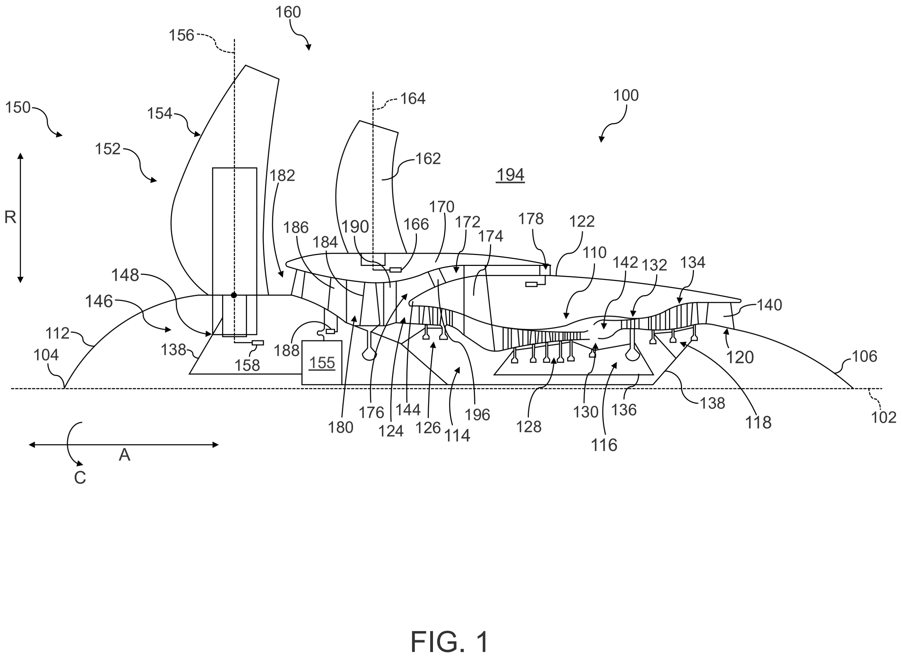

Referring now to FIG. 1, a schematic cross-sectional view of a gas turbine engine 100 is provided according to an example embodiment of the present disclosure. Particularly, FIG. 1 provides a turbofan engine having a rotor assembly with a single stage of unducted rotor blades. In such a manner, the rotor assembly may be referred to herein as an "unducted fan," or the entire engine 100 may be referred to as an "unducted turbofan engine." In addition, the gas turbine engine 100 of FIG. 1 includes a third stream extending from the compressor section to a rotor assembly flowpath over the turbomachine, as will be explained in more detail below.

For reference, the gas turbine engine 100 defines an axial direction A, a radial direction R, and a circumferential direction C. Moreover, the gas turbine engine 100 defines an axial centerline 102 that extends along the axial direction A. In general, the axial direction A extends parallel to the axial centerline 102, the radial direction R extends outward from and inward to the axial centerline 102 in a direction orthogonal to the axial direction A, and the circumferential direction extends three hundred sixty degrees (360°) around the axial centerline 102. The gas turbine engine 100 extends between a forward end 104 and an aft end 106, e.g., along the axial direction A.

The gas turbine engine 100 includes a turbomachine 110, a spinner 112, and a fan section 150. Generally, the turbomachine 110 includes, in serial flow order, a compressor section 114, a combustion section 116, a turbine section 118, and an exhaust section 120. Particularly, as shown in FIG. 1, the turbomachine 110 includes a core cowl 122 that defines an annular core inlet 124. The core cowl 122 further encloses at least in part a low pressure system and a high pressure system. For example, the core cowl 122 depicted encloses and supports at least in part a booster or low pressure ("LP") compressor 126 of the compressor section 114 for pressurizing the air that enters the turbomachine 110 through core inlet 124. A high pressure ("HP"), multi-stage, axial-flow compressor 128 of the compressor section 114 receives pressurized air from the LP compressor 126 and further increases the pressure of the air. The pressurized air stream flows downstream to a combustor 130 of the combustion section 116 where fuel is injected into the pressurized air stream and ignited to raise the temperature and energy level of the pressurized air.

It will be appreciated that as used herein, the terms "high/low speed" and "high/low pressure" are used with respect to the high pressure/high speed system and low pressure/low speed system interchangeably. Further, it will be appreciated that the terms "high" and "low" are used in this same context to distinguish the two systems, and are not meant to imply any absolute speed and/or pressure values.

The high energy combustion products flow from the combustor 130 downstream to an HP turbine 132 of the turbine section 118. The HP turbine 132 drives the HP compressor 128 through a high pressure shaft 136. In this regard, the HP turbine 132 is drivingly coupled with the HP compressor 128. The high energy combustion products then flow to an LP turbine 134 of the turbine section 118. The LP turbine 134 drives the LP compressor 126 and components of the fan section 150 through an LP shaft 138. In this regard, the LP turbine 134 is drivingly coupled with the LP compressor 126 and components of the fan section 150. The LP shaft 138 is coaxial with the HP shaft 136 in this example embodiment. After driving each of the HP and LP turbines 132, 134, the combustion products exit the turbomachine 110 through a turbomachine exhaust nozzle 140 of the exhaust section 120.

Accordingly, the turbomachine 110 defines a working gas flow path or core duct 142 that extends between the core inlet 124 and the turbomachine exhaust nozzle 140. The core duct 142 is an annular duct positioned generally inward of the core cowl 122 along the radial direction R.

The fan section 150 includes a fan 152, which is the primary fan in this example embodiment. For the depicted embodiment of FIG. 1, the fan 152 is an open rotor or unducted fan 152. In such a manner, the gas turbine engine 100 may be referred to as an open rotor engine.

As depicted, the fan 152 includes an array of fan blades 154 (only one shown in FIG. 1). The fan blades 154 are rotatable, e.g., about the axial centerline 102. As noted above, the fan 152 and the spinner 112 are drivingly coupled with the LP turbine 134 via the LP shaft 138. For the embodiments shown in FIG. 1, the fan 152 is coupled with the LP shaft 138 via a gearbox 155 that is a speed reduction gearbox, e.g., in an indirect-drive or geared-drive configuration.

It will be appreciated that the fan blades 154 may be configured to be composite fan blades, e.g., formed in whole or in part of a composite material. The term composite material as used herein may be defined as a material containing a reinforcement such as fibers or particles supported in a binder or matrix material. Composites include metallic and non-metallic composites.

Moreover, the array of fan blades 154 can be arranged in equal spacing around the axial centerline 102. Each fan blade 154 has a root and a tip and a span defined therebetween. Each fan blade 154 defines a central blade axis 156. For this embodiment, each fan blade 154 of the fan 152 is rotatable about its central blade axis 156, e.g., in unison with one another. One or more actuators 158 are provided to facilitate such rotation and therefore may be used to change a pitch of the fan blades 154 about their respective central blades' axes 156.

As depicted, it will be appreciated that the fan section 150 includes a variable pitch fan assembly 146 and a disk 148 having a plurality of disk segments arranged in a spaced apart manner. The variable pitch fan assembly 146 is coupled to the disk 148, comprising a trunnion coupled to the disk 148 and the fan blade 154. The disk 148 has a generally annular shape about the axial direction A. Further, the fan blades 154 extend outwardly from the disk 148 generally along the radial direction R. Each fan blade 154 is also rotatable relative to the disk 148 about the central blade axis 156 by virtue of the fan blades 154 being operatively coupled to the actuator(s) 158 configured to collectively vary the pitch of the fan blades 154, e.g., in unison.

The fan section 150 further includes a fan guide vane array 160 that includes fan guide vanes 162 (only one shown in FIG. 1) disposed around the axial centerline 102. For this embodiment, the fan guide vanes 162 are not rotatable about the axial centerline 102. Each fan guide vane 162 has a root and a tip and a span defined therebetween. The fan guide vanes 162 may be unshrouded, as shown in FIG. 1 or, alternatively, may be shrouded, e.g., by an annular shroud spaced outward from the tips of the fan guide vanes 162 along the radial direction R or attached to the fan guide vanes 162.

Each fan guide vane 162 defines a central blade axis 164. For this embodiment, each fan guide vane 162 of the fan guide vane array 160 is rotatable about its respective central blade axis 164, e.g., in unison with one another. One or more actuators 158 are provided to facilitate such rotation and, therefore, may be used to change a pitch of the fan guide vane 162 about its respective central blade axis 164. However, in other embodiments, each fan guide vane 162 may be fixed or unable to be pitched about its central blade axis 164. The fan guide vanes 162 are mounted to a fan cowl 170.

As shown in FIG. 1, in addition to the fan 152, which is unducted, a ducted fan 184 is included aft of the fan 152, such that the gas turbine engine 100 includes both a ducted and an unducted fan which both serve to generate thrust through the movement of air without passage through at least a portion of the turbomachine 110 (e.g., without passage through the HP compressor 128 and combustion section 116 for the embodiment depicted). The ducted fan 184 is rotatable about the same axis (e.g., the axial centerline 102) as the fan blade 154. The ducted fan 184 is, for the embodiment depicted, driven by the low pressure turbine 134 (e.g., coupled to the LP shaft 138). In the embodiment depicted, as noted above, the fan 152 may be referred to as the primary fan, and the ducted fan 184 may be referred to as a secondary fan. It will be appreciated that these terms "primary" and "secondary" are terms of convenience, and do not imply any particular importance, power, or the like.

The ducted fan 184 includes a plurality of fan blades (not separately labeled in FIG. 1) arranged in a single stage, such that the ducted fan 184 may be referred to as a single stage fan. The fan blades of the ducted fan 184 can be arranged in equal spacing around the axial centerline 102. Each blade of the ducted fan 184 has a root and a tip and a span defined therebetween.

The fan cowl 170 annularly encases at least a portion of the core cowl 122 and is generally positioned outward of at least a portion of the core cowl 122 along the radial direction R. Particularly, a downstream section of the fan cowl 170 extends over a forward portion of the core cowl 122 to define a fan duct flow path, or simply a fan duct 172. According to this embodiment, the fan flow path or fan duct 172 may be understood as forming at least a portion of the third stream of the gas turbine engine 100.

Incoming air may enter through the fan duct 172, through a fan duct inlet 176, and may exit through a fan exhaust nozzle 178 to produce propulsive thrust. The fan duct 172 is an annular duct positioned generally outward of the core duct 142 along the radial direction R. The fan cowl 170 and the core cowl 122 are connected together and supported by a plurality of substantially radially extending, circumferentially spaced stationary struts 174 (only one shown in FIG. 1). The stationary struts 174 may each be aerodynamically contoured to direct air flowing thereby. Other struts in addition to the stationary struts 174 may be used to connect and support the fan cowl 170 or core cowl 122. In many embodiments, the fan duct 172 and the core duct 142 may at least partially co-extend (generally axially) on opposite sides (e.g., opposite radial sides) of the core cowl 122. For example, the fan duct 172 and the core duct 142 may each extend directly from a leading edge 144 of the core cowl 122 and may partially co-extend generally axially on opposite radial sides of the core cowl 122.

The gas turbine engine 100 also defines or includes an inlet duct 180. The inlet duct 180 extends between an engine inlet 182 and the core inlet 124/fan duct inlet 176. The engine inlet 182 is defined generally at the forward end of the fan cowl 170 and is positioned between the fan 152 and the fan guide vane array 160 along the axial direction A. The inlet duct 180 is an annular duct that is positioned inward of the fan cowl 170 along the radial direction R. Air flowing downstream along the inlet duct 180 is split, not necessarily evenly, into the core duct 142 and the fan duct 172 by a fan duct splitter or leading edge 44 of the core cowl 122. In the embodiment depicted, the inlet duct 180 is wider than the core duct 142 along the radial direction R. The inlet duct 180 is also wider than the fan duct 172 along the radial direction R.

Notably, for the embodiment depicted, the gas turbine engine 100 further includes an array of inlet guide vanes 186 positioned in the inlet duct 180 upstream of the ducted fan 184 and downstream of the engine inlet 182. The array of inlet guide vanes 186 are arranged around the axial centerline 102. For this embodiment, the inlet guide vanes 186 are not rotatable about the axial centerline 102. Each inlet guide vane 186 defines a central blade axis (not labeled for clarity), and is rotatable about its respective central blade axis, e.g., in unison with one another. In such a manner, the inlet guide vanes 186 may be considered a variable geometry component. One or more actuators 158 are provided to facilitate such rotation and therefore may be used to change a pitch of the inlet guide vanes 186 about their respective central blade axes. However, in other embodiments, each inlet guide vanes 186 may be fixed or unable to be pitched about its central blade axis.

Further, located downstream of the ducted fan 184 and upstream of the fan duct inlet 176, the gas turbine engine 100 includes an array of outlet guide vanes (OGVs) 190. As with the array of inlet guide vanes 186, the array of outlet guide vanes 190 are not rotatable about the axial centerline 102. However, for the embodiment depicted, unlike the array of inlet guide vanes 186, the array of outlet guide vanes 190 are configured as fixed-pitch outlet guide vanes.

Further, it will be appreciated that for the embodiment depicted, the fan exhaust nozzle 178 of the fan duct 172 is further configured as a variable geometry exhaust nozzle. In such a manner, the gas turbine engine 100 includes one or more actuators 158 for modulating the variable geometry exhaust nozzle. For example, the variable geometry exhaust nozzle may be configured to vary a total cross-sectional area (e.g., an area of the nozzle in a plane perpendicular to the axial centerline 102) to modulate an amount of thrust generated based on one or more engine operating conditions (e.g., temperature, pressure, mass flowrate, etc. of an airflow through the fan duct 172). A fixed geometry exhaust nozzle may also be adopted.

The gas turbine engine 100, as noted above includes a primary fan, or rather the fan 152 having fan blades 154, and a secondary fan, or rather the ducted fan 184 having fan blades 185. Airflow from the fan 152 is split between a bypass passage 194 and the inlet duct 180 by an inlet splitter. Airflow from the ducted fan 184 is split between the fan duct 172 and the core duct 142 by the leading edge 144 (sometimes also referred to as a fan duct splitter). The gas turbine engine 100 in such a form defines a "first" stream through the bypass passage 194, a "second" stream through the core duct 142, and a "third" stream through the fan duct 172.

Moreover, referring still to FIG. 1, in exemplary embodiments, air passing through the fan duct 172 may be relatively cooler (e.g., lower temperature) than one or more fluids utilized in the turbomachine 110. In this way, one or more heat exchangers 196 may be positioned in thermal communication with the fan duct 172. For example, one or more heat exchangers 196 may be disposed within the fan duct 172 and utilized to cool one or more fluids from the core engine with the air passing through the fan duct 172, as a resource for removing heat from a fluid, e.g., compressor bleed air, oil, or fuel.

Although not depicted, the heat exchanger 196 may be an annular heat exchanger extending substantially 360 degrees in the fan duct 172 (e.g., at least 300 degrees, such as at least 330 degrees). In such a manner, the heat exchanger 196 may effectively utilize the air passing through the fan duct 172 to cool one or more systems of the gas turbine engine 100 (e.g., lubrication oil systems, compressor bleed air, electrical components, etc.). The heat exchanger 196 uses the air passing through the fan duct 172 as a heat sink and correspondingly increases the temperature of the air downstream of the heat exchanger 196 exiting the fan exhaust nozzle 178.

As described in further detail below, the gas turbine engine 100 includes a turbine vane frame assembly 200. The turbine vane frame assembly 200 is disposed between the HP turbine 132 and the LP turbine 134. Specifically, the turbine vane frame assembly 200 directs air from the HP turbine 132 to the LP turbine 134.

It should be appreciated that the gas turbine engine 100 depicted in FIG. 1 and described herein is by way of example only, and that embodiments of the present disclosure may be incorporated in other gas turbine engines as well (such as a ducted turbofan engine).

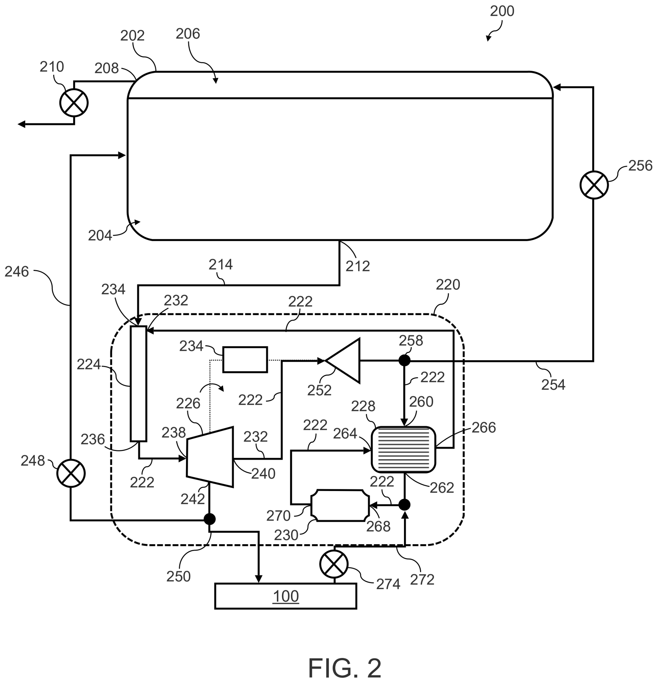

Now referring to FIG. 2, a schematic view of a fuel system 200 for a gas turbine engine 100 is provided. The fuel system 200 includes a fuel tank 202. The fuel tank stores liquid fuel 204 for use by the gas turbine engine 100. Specifically, the fuel tank 202 includes an amount of liquid fuel 204 and an amount of vapor, air, and/or gas. The space within the fuel tank containing the vapor, air, and/or gas may generally be referred to as ullage 206. The fuel tank 202 may include a vent 208 including a vent valve 210 fluidly connected to the ullage 206, and the vent valve 210 is operable to maintain a specified pressure in the ullage 206. The fuel tank 202 includes a liquid fuel outlet 212 and a liquid fuel line 214 that provides the liquid fuel 204 to the gas turbine engine 100.

The fuel system 200 includes a fuel deoxygenator system 220. The fuel deoxygenator system 220 is configured to remove oxygen from the liquid fuel 204 to form "deoxygenated fuel" and to provide the deoxygenated fuel to the gas turbine engine 100 and/or the fuel tank 202. By removing oxygen from the liquid fuel 204, combustion efficiency of the gas turbine engine 100 increases and undesirable particulate formation (such as soot and coke) reduces. The fuel deoxygenator system 220 includes a stripping gas line 222, a contactor 224, a separator 226, a recuperator 228, and a catalyst 230.

The stripping gas line 222 transmits a stripping gas throughout components of the fuel deoxygenator system 220. Specifically, the stripping gas line 222 connects the contactor 224 to the separator 226, the separator 226 to the recuperator 228, the recuperator 228 to the catalyst 230, and the recuperator 228 to the contactor 224. The stripping gas line 222 may include a plurality of tubes or other fluid connectors connecting the components of the fuel deoxygenator system 220.

The contactor 224 mixes liquid fuel 204 from the fuel tank 202 with a stripping gas to form a mixture of deoxygenated fuel and mixed stripping gas. The contactor 224 generally defines a gas inlet 232, a fuel inlet 234, and a mixture outlet 236. The gas inlet 232 is fluidly connected to the recuperator 228 via the stripping gas line 222 and configured to provide the stripping gas. The fuel inlet 234 is fluidly connected to the liquid fuel line 214 of the fuel tank 202 and is configured to provide the liquid fuel 204. The mixture outlet 236 is configured to output the mixture of the mixed stripping gas and the deoxygenated fuel to the separator 226.

In the contactor 224, the stripping gas and the liquid fuel 204 mix, and the partial pressure of oxygen in the liquid fuel 204 is greater than the partial pressure of oxygen in the stripping gas. Because of the difference in partial pressures, oxygen diffuses from the liquid fuel 204 to the stripping gas, forming the mixture of the deoxygenated fuel and the mixed stripping gas.

The separator 226 is configured to separate the deoxygenated fuel from the mixed stripping gas. The separator 226 includes a mixture inlet 238, a gas outlet 240, and a fuel outlet 242. The mixture inlet 238 is fluidly connected to the mixture outlet 236 downstream of the contactor 224 and receives the mixture. The separator 226 may be a centrifugal separator, which is rotated by an actuator 234 to induce centrifugal forces that separate the mixed stripping gas from the deoxygenated fuel. Alternatively, the separator 226 may be a different type of separator, such as a settling tank. The mixed stripping gas exits the separator 226 through the gas outlet 240, and the deoxygenated fuel exits the separator 226 through the fuel outlet 242.

The fuel outlet 242 provides the deoxygenated fuel to the gas turbine engine 100 and/or the fuel tank 202. Specifically, the fuel system 200 may include a deoxygenated fuel line 246 downstream of the separator 226, the deoxygenated fuel line 246 fluidly connecting the fuel outlet 242 of the separator 226 to the fuel tank 202. The deoxygenated fuel line 246 is configured to provide at least a portion of the deoxygenated fuel to the fuel tank 202, reducing overall oxygen content of the liquid fuel 204 in the fuel tank 202. A deoxygenated fuel line valve 248 controls a volume of the deoxygenated fuel returned to the fuel tank 202. The fuel system 200 includes an engine fuel line 250 fluidly connecting the fuel outlet 242 to the gas turbine engine 100.

The fuel system 200 may include a boost pump 252 fluidly connected to the gas outlet 240. The boost pump 252 transmits the mixed stripping gas from the separator 226 to the recuperator 228. Specifically, the boost pump 252 urges the mixed stripping gas from the separator 226 to the recuperator 228. It will be appreciated that the fuel system 200 may omit the boost pump 252, and the fuel outlet of the separator 226 may directly connect to the recuperator 228.

The fuel system 200 includes a fuel tank line 254 fluidly connecting the stripping gas line 222 to the ullage 206 of the fuel tank 202. The fuel tank line 254 provides at least a portion of the mixed stripping gas to the ullage 206, reducing the amount of mixed stripping gas that is catalyzed to strip additional liquid fuel 204. In particular, the fuel tank line 254 may include a fuel tank valve 256 that selectively allows the portion of the mixed stripping gas to flow into the ullage 206. Providing the mixed stripping gas controls the amount of oxygen in the ullage 206 below specified regulatory standards. That is, the mixed stripping gas has less oxygen than ambient air, and introducing the mixed stripping gas to the ullage 206 reduces the overall oxygen content of the fuel tank 202. The stripping gas line 222 and the fuel tank line 254 meet at a junction 258. In FIG. 2, the junction 258 and the fuel tank valve 256 are separated, and it will be appreciated that the fuel tank valve 256 may be located at the junction 258.

The recuperator 228 is configured to receive the mixed stripping gas from the separator 226 and a stripping gas heated by the catalyst 230 and to transfer heat from the stripping gas to the mixed stripping gas. The recuperator 228 is a heat exchanger that includes a first fluid inlet 260, a first fluid outlet 262, a second fluid inlet 264, and a second fluid outlet 266. The catalyst 230 includes an inlet 268 and an outlet 270. The first fluid inlet 260 is fluidly connected to the separator 226 (and the gas boost pump 252, if present) via the stripping gas line 222 to receive the mixed stripping gas. The first fluid outlet 262 is fluidly connected to the inlet 268 of the catalyst 230 via the stripping gas line 222 to provide heated mixed stripping gas. The second fluid inlet 264 is fluidly connected to the outlet 270 of the catalyst 230 via the stripping gas line 222 to receive the stripping gas from the catalyst. The second fluid outlet 266 is fluidly connected to the gas inlet 232 via the stripping gas line 222 to provide the stripping gas to the contactor 224. That is, the mixed stripping gas flows from the first fluid inlet 260 to the first fluid outlet 262 and is heated by the stripping gas (which was heated by the catalyst 230) flowing from the second fluid inlet 264 to the second fluid outlet 266. In such a form, the recuperator 228 recovers heat from the heated stripping gas to heat the mixed stripping gas and transmits the cooled stripping gas to the contactor 224. As described below, heating the mixed stripping gas increases the catalytic reactions of the catalyst 230, removing additional oxygen from the mixed stripping gas.

The catalyst 230 is configured to remove oxygen from the mixed stripping gas and form the stripping gas. The catalyst 230 includes catalyzing materials that react with the oxygen in the mixed stripping gas, removing the oxygen to leave only the stripping gas. The catalyzing reactions are exothermic, and the heat generated by the exothermic reactions heats the stripping gas. The heat absorbed by the stripping gas is recovered by the recuperator 228 to heat the mixed stripping gas. To drive additional catalytic reactions, the mixed stripping gas is heated by the recuperator 228, and thus additional oxygen is removed from the mixed stripping gas. An exemplary catalyst 230 is a catalytic converter, and the catalytic reactions may have a specified temperature from 150°C to 650°C, such as from 300°C to 500°C. In some embodiments, the catalyst 230 is a sole catalyst of the fuel deoxygenator system 220, with no other catalysts to perform deoxygenation of the stripping gas. By using only one catalyst, the total number of components of the fuel system 200 is reduced, reducing weight to address space and weight constraints.

The fuel system 200 may include an air source 272 fluidly connected to the stripping gas line 222 upstream of the inlet 268 of the catalyst 230. The air source 272 provides heated air to the catalyst 230, mixing with the mixed stripping gas to further increase the temperature of the mixed stripping gas. As described above, the catalytic reactions of the catalyst 230 increase at higher temperatures, so the additional heat from the air source 272 improves deoxygenation of the stripping gas. The air source 272 may be a bleed from a compressor of the gas turbine engine 100, and a bleed valve 274 may control an amount of heated air from the air source 272 introduced to the inlet 268 of the catalyst 230.

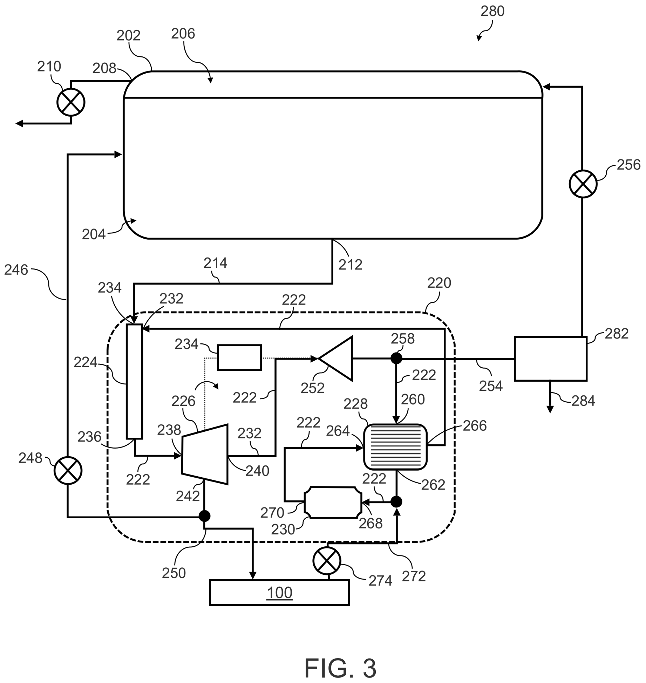

With reference to FIG. 3, a schematic view of another fuel system 280 for a gas turbine engine 100 is provided. The fuel system 280 includes similar components as the fuel system 200 of FIG. 2, and similar components will share a similar numeral. The fuel system 280 includes condenser 282 coupled to the fuel tank line 254 between the separator 226 and the fuel tank 202. The condenser 282 is configured to remove moisture from the portion of the mixed stripping gas provided to the fuel tank 202. Water in the mixed stripping gas may reduce the combustion characteristics of the liquid fuel 204, so removing moisture from the mixed stripping gas reduces the overall water content of the liquid fuel 204 in the fuel tank 202. The condenser 282 may be any suitable type. A discharge 284 line removes water accumulated by the condenser 282.

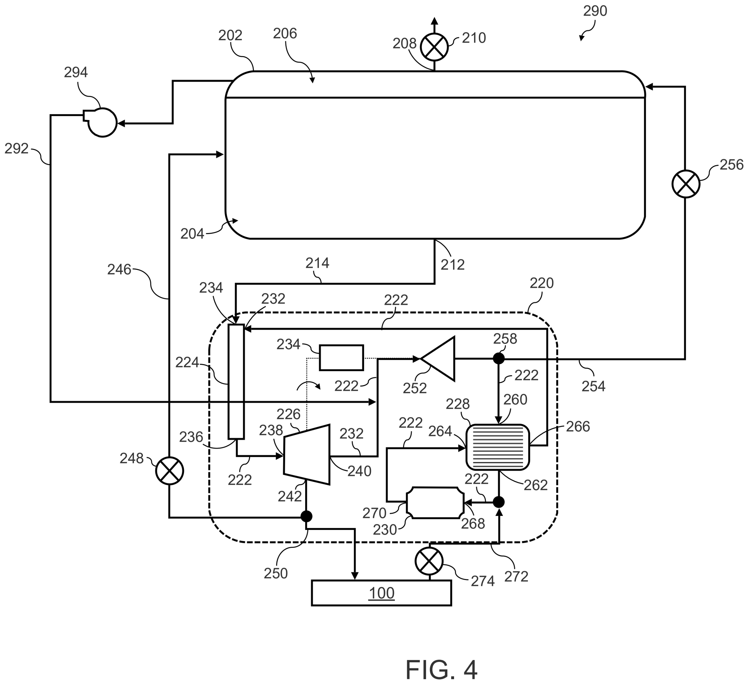

Now referring to FIG. 4, a schematic view of another fuel system 290 for a gas turbine engine 100 is provided. The fuel system 290 includes similar components as the fuel system 200 of FIG. 2, and similar components will share a similar numeral. The fuel system 290 includes an ullage line 292 fluidly connecting the ullage 206 of the fuel tank to the recuperator 228. The ullage line 292 provides air from the ullage 206 to the mixed stripping gas. In particular, the ullage line 292 may provide the air from the ullage 206 to the mixed stripping gas upstream of the boost pump 252, generating a mixture of the mixed stripping gas and the air from the ullage 206 for the recuperator 228 to heat. The fuel system 290 may include an ullage pump 294 fluidly connected to the ullage line 292 upstream of the recuperator 228. The ullage pump 294 is configured to pump and/or otherwise transfer the air from the ullage 206 through the ullage line 292 to the recuperator 228. The fuel tank line 254 transmits a portion of the mixture back to the ullage 206 and away from the recuperator 228.

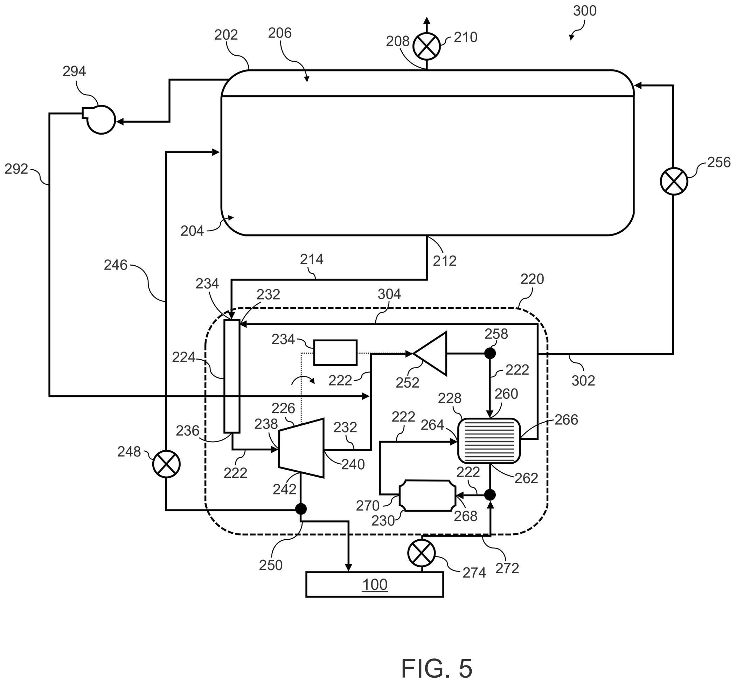

Now referring to FIG. 5, a schematic view of another fuel system 300 for a gas turbine engine 100 is provided. The fuel system 300 includes similar components as the fuel system 200 of FIG. 2, and similar components will share a similar numeral. In FIG. 5, a fuel tank line 302 is connected to the second fluid outlet 266 of the recuperator 228 to provide a portion of the stripping gas from the recuperator 228 to the fuel tank 202. In such a form, rather than providing mixed stripping gas to the ullage 206, the stripping gas that has been deoxygenated by the catalyst 230 is provided to the ullage 206. The stripping gas reduces the total oxygen content in the fuel tank 202, reducing potential oxidation reactions with the liquid fuel 204. The fuel tank valve 256 controls the portion of the stripping gas provided to the ullage 206, and the remainder is provided to the contactor 224 to deoxygenate the liquid fuel 204. A contactor line 304 provides the remainder of the striping gas 218 from the recuperator 228 to the contactor 224.

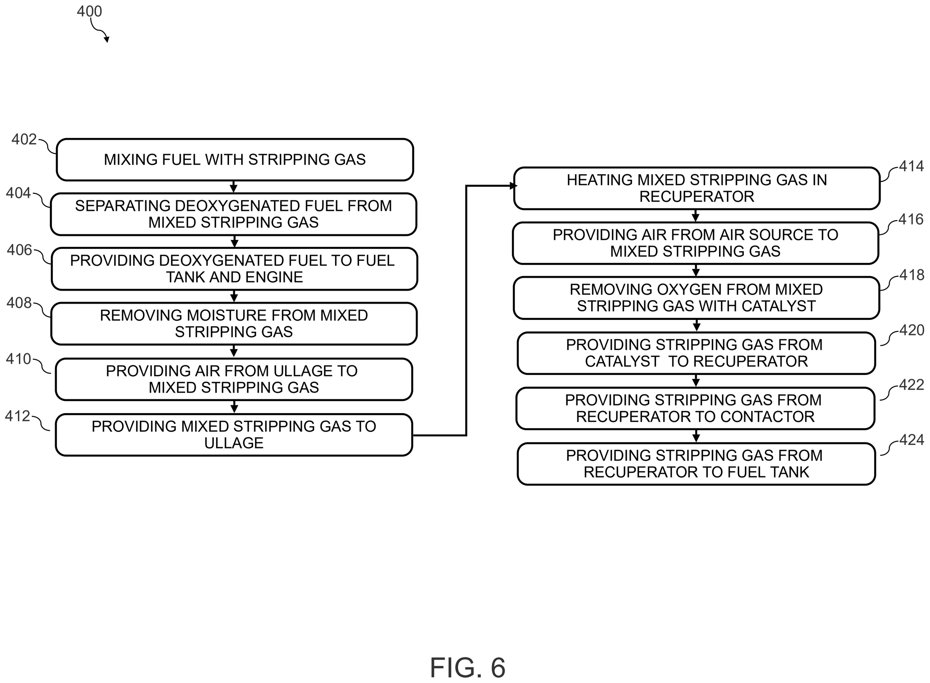

Referring now to FIG. 6, a flow diagram is provided of a method 400 of operating a fuel system to deoxygenate fuel for a gas turbine engine in accordance with an exemplary aspect of the present disclosure. One or more of the blocks of the method 400 may be performed, at least in part, by a controller 500 described below. As is depicted, the method 400 includes at (402) mixing, in a contactor as shown in FIG. 2, fuel from a fuel tank with a stripping gas to form deoxygenated fuel and mixed stripping gas. As described above, mixing the fuel with the stripping gas causes oxygen to diffuse from the fuel into the stripping gas, forming mixed stripping gas.

The method 400 includes at (404) separating the deoxygenated fuel from the mixed stripping gas. The mixture of the deoxygenated fuel and the mixed stripping gas is provided to a separator as shown in FIG. 2, which separates the deoxygenated fuel from the mixed stripping gas. Specifically, the separator may be a centrifugal separator that uses centrifugal forces to drive the deoxygenated fuel away from the mixed stripping gas.

The method 400 includes at (406) providing a portion of the deoxygenated fuel to the fuel tank as shown in FIG. 2 and the remainder of the deoxygenated fuel to the gas turbine engine. After deoxygenation, the fuel may be used by the gas turbine engine for combustion. Fuel not immediately needed for combustion may be returned to the fuel tank, reducing overall oxygen content in the fuel tank.

The method 400 includes at (408) removing moisture from at least a portion of the mixed stripping gas. As described above, following separation from the deoxygenated fuel, a condenser as shown in FIG. 3 may remove moisture from the mixed stripping gas prior to providing the mixed stripping gas to a recuperator or an ullage of the fuel tank. It will be appreciated that the step (408) may be omitted.

The method 400 includes at (410) providing air from the ullage of the fuel tank to the mixed stripping gas as shown in FIG. 4. The air from the ullage increases a total amount of gas that becomes the stripping gas and reduces oxygen in the ullage. It will be appreciated that the step (410) may be omitted.

The method 400 includes at (412) providing a portion of the mixed stripping gas to the fuel tank as shown in FIG. 4. A fuel tank line provides the portion of the mixed stripping gas to the ullage of the fuel tank. The mixed stripping gas helps to control oxygen content of the ullage.

The method 400 includes at (414) heating the mixed stripping gas in a recuperator with heated stripping gas from a catalyst as shown in FIG. 2. The recuperator transfers heat from stripping gas heated by the catalyst to the mixed stripping gas. The heated mixed stripping gas improves catalytic reactions in the catalyst.

The method 400 includes at (416) providing air from an air source to the mixed stripping gas exiting the recuperator as shown in FIG. 2. The air source may be a bleed system that bleeds heated air from a compressor. The air increases the temperature of the mixed stripping gas, improving the catalytic reactions of the catalyst.

The method 400 includes at (418) providing the mixed stripping gas to a catalyst and removing oxygen from the mixed stripping gas with the catalyst to form the stripping gas as shown in FIG. 2. The catalyst reacts with oxygen in the oxygenate stripping gas, leaving only stripping gas. The catalytic reactions are exothermic, and the stripping gas is heated by the catalyst.

The method 400 includes at (420) providing the stripping gas from the catalyst to the recuperator as shown in FIG. 2. The heated stripping gas is returned to the recuperator to heat mixed stripping gas in the recuperator. In such a form, the recuperator recovers heat from the catalytic reactions to heat the mixed stripping gas.

The method 400 includes at (422) providing the stripping gas from recuperator to the contactor as shown in FIG. 2. The stripping gas, having been deoxygenated, is provided to deoxygenated fuel, as described in step (402).

The method 400 includes at (424) providing a portion of the stripping gas to the fuel tank as shown in FIG. 4. As with step (412), a portion of the stripping gas may be provided to the ullage of the fuel tank to control the oxygen content of the ullage. It will be appreciated that one or both of steps (412) or (424) may be omitted.

By using a recuperator to recover heat from the deoxygenated stripping gas, catalytic reactions at the catalyst increase and additional oxygen is removed from the mixed stripping gas. In such a form, the recuperator reduces additional heaters or heat management to drive the deoxygenating chemical reactions. As a result, reduction of oxygen from the fuel is improved, which reduces oxidation reactions that may occur in the fuel tank and provides more consistent combustion when used in the gas turbine engine.

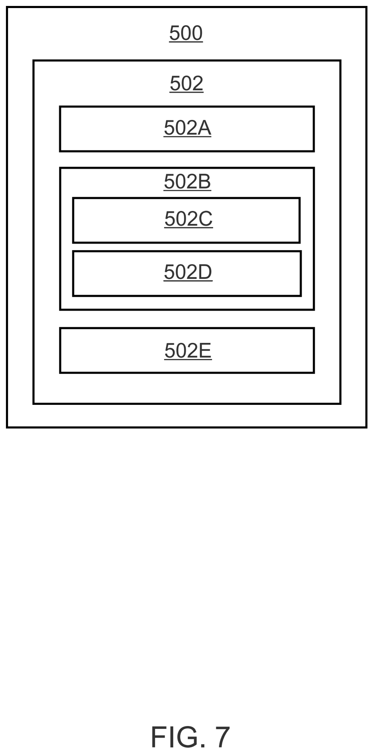

Now referring to FIG. 7, the operation of a controller 500, which may be used to control one or more components of the fuel system 200, 280, 290 of FIGS. 2-5 or to perform the method 400, will be described. In at least certain embodiments, the controller 500 can include one or more computing devices 502. The computing devices 502 can include one or more processors 502A and one or more memory devices 502B. The one or more processors 502A can include any suitable processing device, such as a microprocessor, microcontroller, integrated circuit, logic device, or other suitable processing device. The one or more memory devices 502B can include one or more computer-readable media, including, but not limited to, non-transitory computer-readable media, RAM, ROM, hard drives, flash drives, or other memory devices.

The one or more memory devices 502B can store information accessible by the one or more processors 502A, including computer-readable instructions 502C that can be executed by the one or more processors 502A. The instructions 502C can be any set of instructions that when executed by the one or more processors 502A, cause the one or more processors 502A to perform operations. In some embodiments, the instructions 502C can be executed by the one or more processors 502A to cause the one or more processors 502A to perform operations, such as any of the operations and functions for which the controller 500 or the computing devices 502 are configured, the operations for operating power source assemblies as described herein, or any other operations or functions of the one or more computing devices 502. The instructions 502C can be software written in any suitable programming language or can be implemented in hardware. Additionally or alternatively, the instructions 502C can be executed in logically or virtually separate threads on the one or more processors 502A. The one or more memory devices 502B can further store data 502D that can be accessed by the one or more processors 502A. For example, the data 502D can include data indicative of power flows, data indicative of engine/ aircraft operating conditions, or any other data or information described herein.

The computing devices 502 can also include a network interface 502E used to communicate, for example, with the other components of the power source assemblies, the vehicle incorporating the power source assemblies. For example, in the embodiment depicted, as noted above, the power source assemblies include one or more sensors for sensing data indicative of one or more parameters (e.g., power level, current level, voltage). The controller 500 is operably coupled to the one or more sensors through, e.g., the network interface, such that the controller 500 may receive data indicative of various operating parameters sensed by the one or more sensors during operation. In such a manner, the controller 500 may be configured to operate the power source assemblies in response to, e.g., the data sensed by the one or more sensors.

The network interface 502E can include any suitable components for interfacing with one or more networks, including for example, transmitters, receivers, ports, controllers, antennas, or other suitable components.

Further aspects are provided by the subject matter of the following clauses:

A fuel system for a gas turbine engine, the fuel system including a fuel tank and a fuel deoxygenator system, the fuel deoxygenator system including a stripping gas line, a contactor including a fuel inlet fluidly connected to the fuel tank, a gas inlet fluidly connected to the stripping gas line, and a mixture outlet, a separator including a mixture inlet fluidly connected to the mixture outlet, a fuel outlet fluidly connected to the gas turbine engine, and a gas outlet fluidly connected to the stripping gas line, a recuperator including a first fluid inlet, a first fluid outlet, a second fluid inlet, and a second fluid outlet, and a catalyst including an inlet and an outlet, wherein the first fluid inlet of the recuperator is fluidly connected to the gas outlet of the separator via the stripping gas line, the first fluid outlet of the recuperator is fluidly connected to the inlet of the catalyst via the stripping gas line, the second fluid inlet is fluidly connected to the outlet of the catalyst via the stripping gas line, and the second fluid outlet is fluidly connected to the gas inlet of the contactor via the stripping gas line.

The fuel system of any of the preceding clauses, wherein the catalyst is a sole catalyst of the fuel deoxygenator system.

The fuel system of any of the preceding clauses, further including an air source fluidly connected to the stripping gas line upstream of the inlet of the catalyst.

The fuel system of any of the preceding clauses, further including a fuel tank line fluidly connected to the stripping gas line.

The fuel system of any of the preceding clauses, wherein the fuel tank line is fluidly connected to an ullage of the fuel tank.

The fuel system of any of the preceding clauses, further including a condenser between the separator and the fuel tank line.

The fuel system of any of the preceding clauses, further including a deoxygenated fuel line fluidly connecting the fuel outlet of the separator to the fuel tank.

The fuel system of any of the preceding clauses, further including an ullage line fluidly connecting an ullage of the fuel tank to the recuperator.

The fuel system of any of the preceding clauses, further including an ullage pump fluidly connected to the ullage line upstream of the recuperator.

The fuel system of any of the preceding clauses, further including a fuel tank line fluidly connected to the second fluid outlet of the recuperator.

The fuel system of any of the preceding clauses, wherein the separator is a centrifugal separator.

The fuel system of any of the preceding clauses, wherein the catalyst is a catalytic converter.

A method for deoxygenating fuel for a gas turbine engine, the method including mixing, in a contactor, fuel from a fuel tank with a stripping gas to form deoxygenated fuel and mixed stripping gas, separating the deoxygenated fuel from the mixed stripping gas, heating the mixed stripping gas in a recuperator with the stripping gas from a catalyst, and providing the stripping gas from the recuperator to the contactor, wherein the catalyst is a sole catalyst.

The method of any of the preceding clauses, further including providing a portion of the mixed stripping gas to the fuel tank.

The method of any of the preceding clauses, further including providing a portion of the stripping gas to the fuel tank.

The method of any of the preceding clauses, further including providing a portion of the deoxygenated fuel to the fuel tank.

The method of any of the preceding clauses, further including removing moisture from at least a portion of the mixed stripping gas.

The method of any of the preceding clauses, further including providing air from an ullage of the fuel tank to the mixed stripping gas.

The method of any of the preceding clauses, further including removing oxygen from the mixed stripping gas with the catalyst.

A fuel deoxygenator system including a stripping gas line, a contactor including a fuel inlet fluidly connected to a fuel tank, a gas inlet fluidly connected to the stripping gas line, and a mixture outlet, a separator including a mixture inlet fluidly connected to the mixture outlet, a fuel outlet, and a gas outlet fluidly connected to the stripping gas line, a recuperator including a first fluid inlet, a first fluid outlet, a second fluid inlet, and a second fluid outlet, and a catalyst including an inlet and an outlet, wherein the first fluid inlet of the recuperator is fluidly connected to the gas outlet of the separator via the stripping gas line, the first fluid outlet of the recuperator is fluidly connected to the inlet of the catalyst via the stripping gas line, the second fluid inlet is fluidly connected to the outlet of the catalyst via the stripping gas line, and the second fluid outlet is fluidly connected to the gas inlet of the contactor via the stripping gas line.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A fuel system (200) for a gas turbine engine (100), the fuel system (200) comprising a fuel tank (202) and a fuel deoxygenator system (220), the fuel deoxygenator system (220) comprising:
a stripping gas line (222);
a contactor (224) including a fuel inlet (234) fluidly connected to a fuel tank (202), a gas inlet (232) fluidly connected to the stripping gas line (222), and a mixture outlet (236);
a separator (226) including a mixture inlet (238) fluidly connected to the mixture outlet (236), a fuel outlet (242), and a gas outlet (232, 240) fluidly connected to the stripping gas line (222);
a recuperator (228) including a first fluid inlet (260), a first fluid outlet (262), a second fluid inlet (264), and a second fluid outlet (266); and
a catalyst (230) including an inlet and an outlet,
wherein the first fluid inlet (260) of the recuperator (228) is fluidly connected to the gas outlet (232, 240) of the separator (226) via the stripping gas line (222), the first fluid outlet (262) of the recuperator (228) is fluidly connected to the inlet of the catalyst (230) via the stripping gas line (222), the second fluid inlet (264) is fluidly connected to the outlet of the catalyst (230) via the stripping gas line (222), and the second fluid outlet (266) is fluidly connected to the gas inlet (232) of the contactor (224) via the stripping gas line (222).

2. The fuel system (200, 280, 290, 300) of any of the preceding claims, wherein the catalyst (230) is a sole catalyst (230) of the fuel deoxygenator system (220).

3. The fuel system (200, 280, 290, 300) of any of the preceding claims, further comprising an air source (272) fluidly connected to the stripping gas line (222) upstream of the inlet of the catalyst (230).

4. The fuel system (200, 280, 290, 300) of any of the preceding claims, further comprising a fuel tank line (254) fluidly connected to the stripping gas line (222).

5. The fuel system (200, 280, 290, 300) of any of the preceding claims, wherein the fuel tank line (254) is fluidly connected to an ullage (206) of the fuel tank (202).

6. The fuel system (200, 280, 290, 300) of any of the preceding claims, further comprising a deoxygenated fuel line (246) fluidly connecting the fuel outlet (242) of the separator (226) to the fuel tank (202).

7. The fuel system (200, 280, 290, 300) of any of the preceding claims, further comprising an ullage line (292) fluidly connecting an ullage (206) of the fuel tank (202) to the recuperator (228).

8. The fuel system (200, 280, 290, 300) of any of the preceding claims, further comprising an ullage pump (294) fluidly connected to the ullage line (292) upstream of the recuperator (228).

9. The fuel system (200, 280, 290, 300) of any of the preceding claims, further comprising a fuel tank line (254) fluidly connected to the second fluid outlet (266) of the recuperator (228).

10. A method (400) for deoxygenating fuel for a gas turbine engine (100), the method (400) comprising:
mixing, in a contactor (224), fuel from a fuel tank (202) with a stripping gas to form deoxygenated fuel and mixed stripping gas;
separating the deoxygenated fuel from the mixed stripping gas;
heating the mixed stripping gas in a recuperator (228) with the stripping gas from a catalyst (230); and
providing the stripping gas from the recuperator (228) to the contactor (224),
wherein the catalyst (230) is a sole catalyst (230).

11. The method (400) of claim 10, further comprising providing a portion of the mixed stripping gas to the fuel tank (202).

12. The method (400) of claim 10 or 11, further comprising providing a portion of the stripping gas to the fuel tank (202).

13. The method (400) of any of claims 10 to 12, further comprising providing a portion of the deoxygenated fuel to the fuel tank (202).

14. The method (400) of any of claims 10 to 13, further comprising removing oxygen from the mixed stripping gas with the catalyst (230).
